# EUROPÄISCHE PATENTSCHRIFT

(11) **EP 2 676 813 B1**
(45) Veröffentlichungstag und Bekanntmachung des Hinweises auf die Patenterteilung: **03.08.2016**
(21) Anmeldenummer: 13169828.4
(22) Anmeldetag: 30.05.2013
(51) Int. Cl.: B60C 11/03, B60C 11/13

(54) **Laufstreifenprofil eines Fahrzeugluftreifens**
Pneumatic tyre tread for a vehycle
Bande de roulement pour pneu de véhicule

(30) Priorität: 21.06.2012 DE 102012105403
(43) Veröffentlichungstag der Anmeldung: 25.12.2013
(73) Patentinhaber: Continental Reifen Deutschland GmbH, 30165 Hannover (DE)
(72) Erfinder: Rittweger, Stefan, 30163 Hannover (DE)
(74) Vertreter: Preusser, Andrea

(56) Entgegenhaltungen:
- EP-A1- 2 239 153
- EP-A1- 2 281 698
- US-A1- 2009 320 981

## Beschreibung

Die Erfindung betrifft ein Laufstreifenprofil eines Fahrzeugreifens - insbesondere eines Fahrzeugluftreifens - mit radial erhabenen Profilelementen , welche durch erste Rillen voneinander getrennt und in radialer Richtung R nach außen hin durch eine radial äußere Oberfläche begrenzt sind, und mit zweiten Rillen, welche sich jeweils ausgehend von einer ersten Rille bis in ein von der ersten Rille begrenztes Profilelement hinein erstrecken und dort mit Abstand zu allen ersten Rillen enden, wobei die zweiten Rillen längs ihrer in der radial äußeren Oberfläche des Profilelementes ausgebildeten Haupterstreckung ausgehend von der ersten Rille zu ihrem Erstreckungsende hin mit einem ersten Erstreckungsabschnitt und mit einem zweiten Erstreckungsabschnitt, welcher bis zum Erstreckungsende der zweiten Rille reicht, ausgebildet sind, wobei die ersten Rillen und die zweiten Rillen in ihrem ersten Erstreckungsabschnitt jeweils längs ihrer Haupterstreckung in radialer Richtung R des Reifens nach innen hin durch einen Rillengrund und beiderseits des Rillengrundes jeweils durch eine Rillenwand begrenzt werden, welche sich in radialer Richtung R des Reifens ausgehend vom Rillengrund bis zur radial äußeren Oberfläche erstreckt.

Derartige Laufstreifenprofile sind bekannt. Die in die Profilelemente hinein erstreckten zweiten Rillen enden dabei üblicherweise stumpf innerhalb des Profilelementes, wobei die zweiten Rillen längs ihrer gesamten Erstreckung ausgehend von der Umfangsrille bis zum Erstreckungsende hin mit einer im Wesentlichen konstanten, deutlich ausgeprägten Rillenbreite ausgebildet sind. Am Erstreckungsende ist die zweite Rille derartiger Profile üblicherweise von einer über die gesamte Erstreckungsbreite der Rille erstreckten Stirnwand der Rille begrenzt, welche sich aus in radialer Richtung ausgehend vom Rillengrund bis zur radial äußeren Oberfläche erstreckt und das stumpfe Ende der Rille bildet. Diese die Rille am Erstreckungsende begrenzende Stirnwand ist in den senkrecht zur Radialen gebildeten Schnittebenen dabei über die Breite der Rille hinweg im Wesentlichen mit geradlinigem Verlauf mit zu den beiden die Rille beiderseits des Rillengrundes hin begrenzenden Rillenwand hingerichteten abgerundeten Übergängen versehen und bildet so eine im Wesentliche ebene Stirnfläche. Diese Ausbildung ermöglicht eine einfache Ausformbarkeit der zweiten Rillen in der Reifenvulkanisationsform durch längs der gesamten Erstreckung der gewünschten Rille entsprechend breit und stabil ausgebildeter Negative - Formrippen - und verhindert darüber hinaus Kerbwirkungen im Betrieb des Reifens. Zur Herstellung der zur Erzeugung dieser Rillen ausgebildeten Formrippen können in einfacher Weise Urformen hergestellt werden.

Für manche Einsatzzwecke eines Reifens ist es wünschenswert, zumindest im Bereich der radial äußeren Oberfläche die Rillenenden von zweiten Rillen jedoch nicht stumpf, sondern unter Einschluss eines spitzen Winkels spitz auslaufend auszubilden. Beispielsweise kann mit Hilfe derartig spitz zulaufender Auslaufenden der zweiten Rillen die Unterbrechungswirkung des Wasserfilmes einer benässten Straßenoberfläche positiv beeinflusst werden.

Die Ausbildung von entsprechend spitz ausgeformten Formrippen (d.h. Negativen), welche sich über die gesamte radiale Erstreckung ausgehend vom Rillengrund bis zur radial äußeren Oberfläche des Reifens zulaufen, ist jedoch nur sehr aufwendig herstellbar. Die Urformen zur Erzeugung derartiger spitz zulaufender Rippen können mit herkömmlichen Fräsern - wenn überhaupt - nur sehr aufwendig mit zusätzlichen Herstellschritten erzeugt werden. Daher sind die Urformen in ihrem Auslauf, sowie die erzeugten Formrippen in ihrem Auslauf und in der Folge die ausgeformten zweiten Rillen des Reifens im Auslauf der durch die Rippen erzeugten zweiten Rillen in ihrem letzten Endabschnitt doch immer noch deutlich abgerundet und nicht spitz auslaufend ausgebildet. Dies beschränkt jedoch die Einsatzfälle, in denen wirklich spitz zulaufende Auslaufenden im Bereich der radial äußeren Oberfläche gewünscht sind. Darüber wird bei diesen herkömmlichen etwas zulaufenden Rippen mit abgerundeten Ausläufen trotz der Abrundung aufgrund ihrer Vollerstreckung über die gesamte Rillentiefe die Kerbwirkung begünstigt.

**Ein Laufstreifenprofil eines Fahrzeugreifens gemäß den Merkmalen des Oberbegriffs von Anspruch 1 ist beispielsweise aus der** EP 2 281 698 A1 **bekannt. Ein derartiges Laufstreifenprofil ist auch aus der** EP 2 239 153 A1 **sowie aus der** US 2009/0320981 A1 **bekannt.**

Der Erfindung liegt die Aufgabe zugrunde, mit einfachen Mitteln die Ausbildung eines derartigen Laufstreifenprofils eines Fahrzeugreifens, bei dem die zweiten Rillen an ihrem stumpfen Rillenende mit spitz zulaufenden Kanten ausgebildet sind, zu schaffen , bei welchem Kerbwirkung besser vermieden werden kann und welches einfach und sicher hergestellt werden kann.

Die Aufgabe wird erfindungsgemäß durch die Ausbildung eines Laufstreifenprofils eines Fahrzeugreifens - insbesondere eines Fahrzeugluftreifens - mit radial erhabenen Profilelementen , welche durch erste Rillen voneinander getrennt und in radialer Richtung R nach außen hin durch eine radial äußere Oberfläche begrenzt sind, und mit zweiten Rillen, welche sich jeweils ausgehend von einer ersten Rille bis in ein von der ersten Rille begrenztes Profilelement hinein erstrecken und dort mit Abstand zu allen ersten Rillen enden, wobei die zweiten Rillen längs ihrer in der radial äußeren Oberfläche des Profilelementes ausgebildeten Haupterstreckung ausgehend von der ersten Rille zu ihrem Erstreckungsende hin mit einem ersten Erstreckungsabschnitt und mit einem zweiten Erstreckungsabschnitt, welcher bis zum Erstreckungsende der zweiten Rille reicht, ausgebildet sind, wobei die ersten Rillen und die zweiten Rillen in ihrem ersten Erstreckungsabschnitt jeweils längs ihrer Haupterstreckung in radialer Richtung R des Reifens nach innen hin durch einen Rillengrund und beiderseits des Rillengrundes jeweils durch eine Rillenwand begrenzt werden, welche sich in radialer Richtung R des Reifens ausgehend vom Rillengrund bis zur radial äußeren Oberfläche erstreckt, gemäß den Merkmalen von Anspruch 1 gelöst, bei dem die zweiten Rillen in ihrem zweiten Erstreckungsabschnitt jeweils längs ihrer Haupterstreckung durch zwei Rillenwände begrenzt werden, welche jeweils die radial äußere Oberfläche in einer Schnittlinie (v) bzw. (w) schneiden, wobei die Schnittlinie (v) und (w) längs der gesamten Erstreckung des zweiten Erstreckungsabschnittes bis zum Erstreckungsende unter Einschluss eines spitzen Winkels aufeinander zu verlaufen und sich im Erstreckungsende der zweiten Rille in einem Schnittpunkt (S) schneiden, und welche sich in einer Tiefe t₂ in einer Schnittlinie (g) schneiden, wobei die Schnittlinie (g) längs der Erstreckung der zweiten Rille über deren gesamte Erstreckung im zweiten Erstreckungsabschnitt in Richtung zum Erstreckungsende der zweiten Rille in radialer Richtung R stetig ansteigt und am Erstreckungsende die radial äußere Oberfläche im Schnittpunkt (S) schneidet.

Durch diese Ausbildung wird ermöglicht, dass im Auslauf der zweiten Rille innerhalb des zweiten Erstreckungsbereichs durch die sich in der Schnittlinie (g) schneidenden beiden Rillenwände und den Verlauf der Schnittlinie (g), welche bis zu dem Schnittpunkt (s) stetig ansteigt und im Schnittpunkt (S) die beiden sich ebenfalls im Schnittpunkt (s) unter spitzem Winkel schneidenden Schnittlinien (v) und (w), welche die beiden Rillenwände mit der radial äußeren Oberfläche bilden, die zweite Rille in der radial äußeren Oberfläche sehr spitz zulaufend ausgebildet wird. Die Ausbildung mit sich in der Schnittlinie (g) schneidenden Rillenwände und mit dem in Richtung zum gemeinsamen Schnittpunkt (S) hin aufeinander zu konvergierenden Schnittlinien (g, v und w) ermöglicht dabei eine einfache Herstellung einer Urform der spitz zulaufenden Formrippen zur Erzeugung der zweiten Rille unter Einsatz einer herkömmlicher Fräsertechnologie. Darüber hinaus bewirkt diese Ausbildung mit spitz zulaufenden Schnittlinien (v) und (w) sowie mit dem bis zum gemeinsamen Schnittpunkt (S) stetig ansteigenden Verlauf der Schnittlinie (g) eine Reduzierung der Gefahr von Kerbwirkung im Endbereich der zweiten Rille trotz des in der radial äußeren Oberfläche ausgebildeten spitz auslaufenden Erstreckungsendes. Dabei wird über die Lebensdauer des Reifens während des Abriebs über das Maß der Tiefe t₂ die Aufrechterhaltung einer spitz zulaufenden Ausbildung des jeweils in der radial äußeren Oberfläche wirksamen Rillenendes der zweiten Rille ermöglicht.

Besonders vorteilhaft ist die Ausbildung eines Laufstreifenprofils gemäß den Merkmalen von Anspruch 2, bei dem die Schnittlinie g geradlinig ausgebildet ist. Hierdurch wird eine besonders einfache Herstellung der spitz zulaufenden Ausbildung des Rillenendes der zweiten Rille ermöglicht.

Besonders vorteilhaft ist die Ausbildung eines Laufstreifenprofils gemäß den Merkmalen von Anspruch 3, wobei die Schnittlinie g gekrümmt und längs der gesamten Erstreckung der Schnittlinie g in Richtung zum Erstreckungsende der zweiten Rille bis zum Erstreckungsende der zweiten Rille hin mit progressiv abnehmender Tiefe T₂ ausgebildet ist. Durch diese Ausbildung kann ausgehend vom Neuzustand des Reifens eine besonders spitz zulaufende, lang erstreckte Ausbildung des Rillenendes in der jeweils auch nach Abrieb wirksamen radial äußeren Oberfläche gezielt über einen sehr langen Lebenszeitraum sicher eingestellt werden.

Besonders vorteilhaft ist die Ausbildung eines Laufstreifenprofils gemäß den Merkmalen von Anspruch 4, wobei wenigstens eine - insbesondere beide - der Schnittlinien (v) bzw. (w) geradlinig ausgebildet ist. Die Ausbildung ermöglicht eine über einen besonders langen Erstreckungsbereich des spitz zulaufend ausgebildeten Auslaufs.

Besonders vorteilhaft ist die Ausbildung eines Laufstreifenprofils gemäß den Merkmalen von Anspruch 5, wobei wenigstens eine - insbesondere beide - der Schnittlinien (v) bzw. (w) längs der Erstreckung bis zum Schnittpunkt S jeweils zur anderen Schnittlinie (w) bzw. (v) hin gekrümmt ausgebildet ist. Die Ausbildung ermöglicht eine einfache individuelle Einstellung der gewünschten Eigenschaften des spitz zulaufenden Auslaufs der zweiten Rille.

Besonders vorteilhaft ist die Ausbildung eines Laufstreifenprofils gemäß den Merkmalen von Anspruch 6, bei dem die zweite Rille zumindest in dem an den zweiten Erstreckungsabschnitt angrenzenden Erstreckungsbereich des ersten Erstreckungsabschnitts mit einer Tiefe t₁ ausgebildet ist und die maximale Tiefe der zweiten Rille im zweiten Erstreckungsabschnitt mit t₂≤ t₁ - insbesondere mit t₂≤ (0,5 t₁) - ausgebildet ist. Hierdurch kann der Einfluss des Auslaufes der zweiten Rille auf den ersten, tief ausgebildeten Erstreckungsabschnitt der zweiten Rille und deren Eigenschaften gezielt begrenzt werden. Somit kann beispielsweise auch der Einfluss des Auslaufes der zweiten Rille auf die Umfangs- und Quersteifigkeit des Profilelementes gezielt begrenzt werden.

Besonders vorteilhaft ist die Ausbildung eines Laufstreifenprofils gemäß den Merkmalen von Anspruch 7, bei dem die zweite Rille längs ihrer Erstreckung in ihrem ersten Erstreckungsabschnitt mit einer in der radial äußeren Oberfläche gemessenen Breite b mit 3 mm≤b≤ 13 mm ausgebildet ist.

Besonders vorteilhaft ist die Ausbildung eines Laufstreifenprofils gemäß den Merkmalen von Anspruch 8, bei dem am Erstreckungsende des ersten Erstreckungsabschnitt eine den ersten Erstreckungsabschnitt zum zweiten Erstreckungsabschnitt hin begrenzende Rillenwand ausgebildet ist, welche ausgehend vom Rillengrund der zweiten Rille im ersten Erstreckungsabschnitt nach radial außen bis zu einer Schnittlinie h mit den sich schneidenden Rillenwänden des zweiten Erstreckungsabschnitts der zweiten Rille erstreckt ausgebildet ist, wobei insbesondere diese Schnittlinie h in der radial äußeren Oberfläche geradlinig unter Einschluss eines Winkels α zu der Haupterstreckungsrichtung der zweiten Rille im zweiten Erstreckungsbereich mit 45° ≤α≤90° ausgerichtet ausgebildet ist.

Die Erfindung wird im Folgenden an Hand der in den Figuren 1 bis 17 dargestellten Ausführungsbeispielen eines PKW-Fahrzeugluftreifens näher erläutert. Hierin zeigen
- Fig.1: einen Abschnitt eines Laufstreifenprofils eines PKW-Fahrzeugluftreifens in Draufsicht,
- Fig.2: das Detail II von Fig.1 in vergrößerter Darstellung zur Erläuterung der Ausbildung einer Querrille,
- Fig.3: die Querrille von Fig.2 in perspektivischer Darstellung,
- Fig.4: die Querrille von Fig.2 in Schnittdarstellung gemäß Schnitt IV-IV von Fig.2,
- Fig.5.: die Querrille von Fig.2 in Schnittdarstellung gemäß Schnitt V-V von Fig 2,
- Fig.6: die Querrille von Fig.2 in Schnittdarstellung gemäß Schnitt VI-VI von Fig.2,
- Fig.7: die Querrille von Fig.2 in Schnittdarstellung gemäß Schnitt VII-VII von Fig.2,
- Fig.8: eine Querrille von Fig.2 in alternativer Ausführung in Draufsicht ,
- Fig.9: eine Querrille von Fig.2 in weiterer alternativer Ausführung in Draufsicht,
- Fig.10: eine Querrille von Fig.2 in weiterer alternativer Ausführung in Draufsicht,
- Fig.11: eine Querrille von Fig.2 in weiterer alternativer Ausführung in Draufsicht,
- Fig.12: eine Querrille von Fig.2 in weiterer alternativer Ausführung in Draufsicht,
- Fig.13: die Querrille von Fig.12 in perspektivischer Darstellung,
- Fig. 14: eine Querrille von Fig.2 in weiterer alternativer Ausführung in Draufsicht,
- Fig. 15: die Querrille von Fig.14 in perspektivischer Darstellung mit alternativer Ausführung,
- Fig.16: die Querrille von Fig.2 in Schnittdarstellung analog zur Darstellung von Fig.7 mit alternativer Ausführung der Schnittlinie (g) und
- Fig. 17: einen Umfangsabschnitt eines Laufstreifenprofils eines PKW- Fahrzeugluftreifens in Draufsicht mit alternativer Ausbildung der Querrillen.

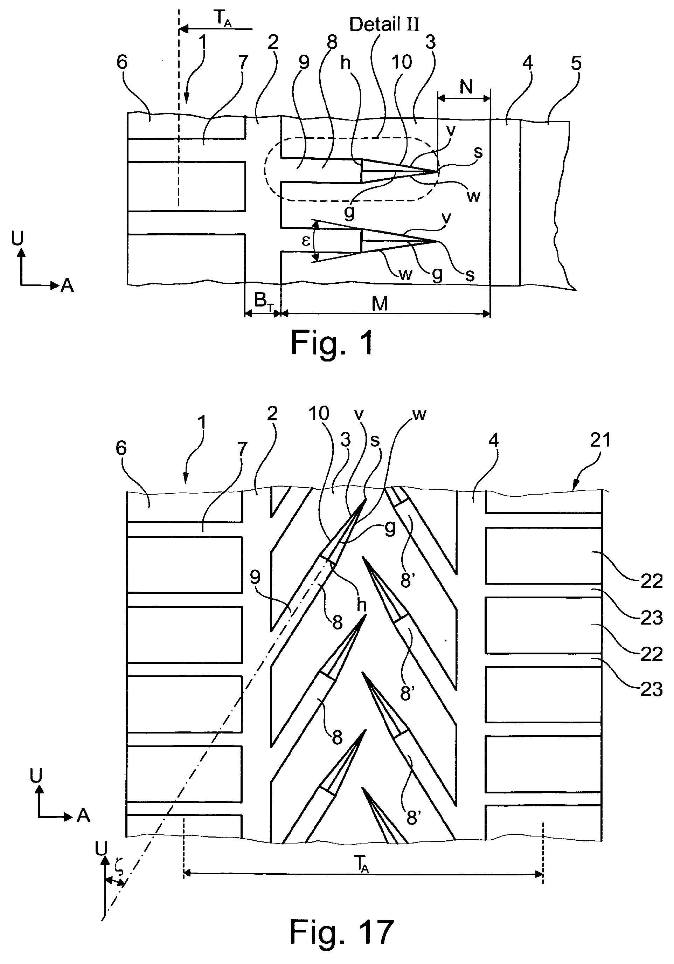

Die Figuren 1 bis 7 zeigen einen Abschnitt eines Laufstreifenprofils eines PKW-Fahrzeugluftreifens radialer Bauart, bei dem in bekannter Weise eine Profilblockreihe 1, eine Umfangsrippe 3 und eine Umfangsrippe 5 in axialer Richtung A des Fahrzeugluftreifens nebeneinander angeordnet sind. Die Profilblockreihe 1 ist eine Schulterprofilblockreihe, welche in der Darstellung von Fig.1 die auf der linken Schulter des Reifens ausgebildete Profilblockreihe bildet. Die Profilblockreihe 1 ist in herkömmlicher Weise aus einer Vielzahl von über den Umfang des Fahrzeugluftreifens verteilten, in Umfangsrichtung U des Reifens hintereinander angeordneten und jeweils durch Querrillen 7 voneinander beabstandeten Profilblockelementen 6 bekannter Art ausgebildet. Die Umfangsrippe 3 und die Umfangsrippe 5 sind in bekannter Weise über den gesamten Umfang des Fahrzeugluftreifens erstreckt und in Umfangsrichtung U des Fahrzeugluftreifens ausgerichtet. Die Profilblockreihe 1 und die Umfangsrippe 3 sind in bekannter Weise in axialer Richtung A des Reifens durch eine über den gesamten Umfang des Fahrzeugluftreifens erstreckte und in Umfangsrichtung U ausgerichtete Umfangsrille 2 bekannter Art voneinander beabstandet. Die Umfangsrippe 3 und die Umfangsrippe 5 sind in bekannter Weise in axialer Richtung A des Reifens durch eine über den gesamten Umfang des Fahrzeugluftreifens ersteckte und in Umfangsrichtung U des Fahrzeugluftreifens ausgerichtete Umfangsrille 4 voneinander beabstandet. Die Bodenaufstandsbreite T_{A} erstreckt sich von der in Fig.1 dargestellten Schulterprofilblockreihe 1 in axialer Richtung A bis zu der in Fig.1 nicht dargestellten rechten Schulterprofilblockreihe. Die Bodenaufstandsbreite T_{A} ist die in axialer Richtung A gemessene Breite des den Boden berührenden Teils des Laufstreifens, welcher den statisch ermittelten Footprint gemäß E.T.R.T.U.- Standards (Last bei 70% der Tragfähigkeit bei einem Innendruck von 2,5 bar; Innendruck 85% von 2,5 bar) entspricht.

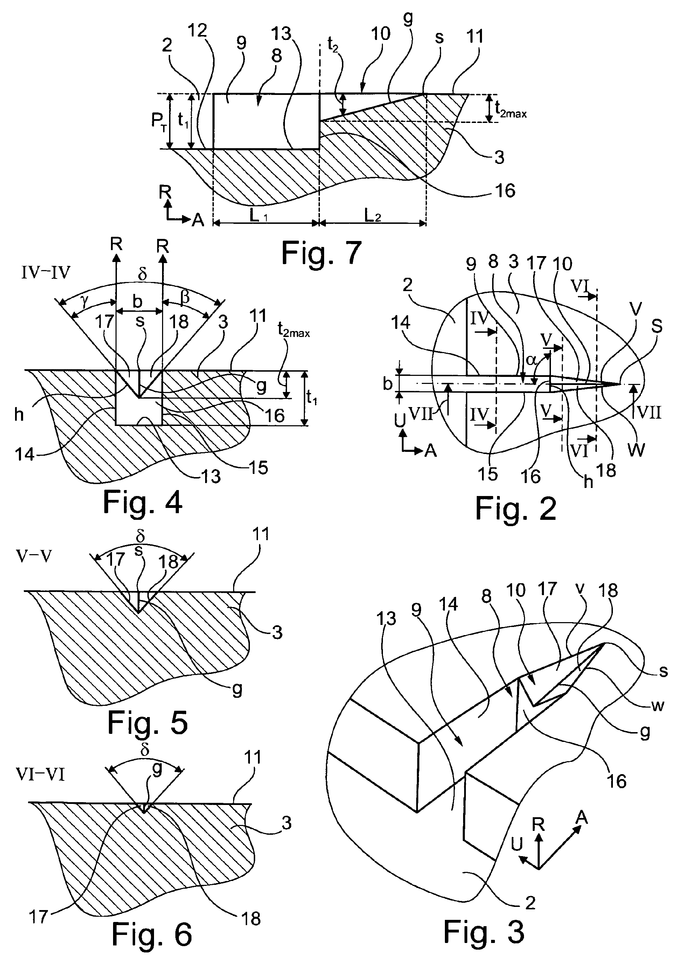

Die Profilblockelemente 6 der Profilblockreihe 1, die Umfangsrippe 3 sowie die Umfangsrippe 5 sind in radialer Richtung R des Fahrzeugluftreifens nach außen hin durch eine - innerhalb des axialen Erstreckungsbereichs der Bodenaufstandsbreite T_{A} die Straßenkontaktoberfläche bildende - radial äußere Oberfläche 11 begrenzt. Wie in Fig. 7 dargestellt ist, sind die Umfangsrillen 2 und 4 in radialer Richtung R nach innen hin jeweils durch einen Rillengrund 12 begrenzt. Der Rillengrund 12 ist in den Querschnittebenen, welche die Reifenachse beinhaltet im Wesentlichen eine geradlinige Schnittkontur bildet. Der Rillengrund 12 der Umfangsrille 2 erstreckt sich in axialer Richtung A des Reifens zwischen der Profilblockreihe 1 und der Umfangsrippe 3 und in Umfangsrichtung U des Reifens über den gesamten Umfang des Fahrzeugluftreifens. Der Rillengrund 12 der Umfangsrille 4 erstreckt sich in axialer Richtung A zwischen der Umfangsrippe 3 und der Umfangsrippe 5 und in Umfangsrichtung U des Fahrzeugluftreifens über den gesamten Umfang des Fahrzeugluftreifens hinweg.

Die Umfangsrille 4 ist beiderseits ihres Rillengrundes 12 jeweils durch eine Rillenwand begrenzt, wobei die die Umfangsrille 4 zur Umfangsrippe 3 hin begrenzende Rillenwand eine die Umfangsrippe 3 zur Umfangsrille 4 hin begrenzende Rippenflanke der Umfangsrippe 3 bildet und die die Umfangsrille 4 zur Umfangsrippe 5 hin begrenzende Rillenwand eine die die Umfangsrippe 5 zur Umfangsrille 4 hin begrenzende Rippenflanke der Umfangsrippe 5 bildet. Die Rillenwände der Umfangsrille 4 erstrecken sich dabei in radialer Richtung R des Fahrzeugluftreifens jeweils ausgehend vom Rillengrund 12 der Umfangsrille 4 bis zur radial äußeren Oberfläche 11 der Umfangsrippe 3 bzw. Umfangsrippe 5.

Die Umfangsrille 2 ist axial beiderseits ihres Rillengrundes 12 jeweils durch eine Rillenwand begrenzt, wobei die die Umfangsrille 2 zur Profilblockreihe 1 hin begrenzende Rillenwand jeweils die die Profilblockelemente 6 der Profilblockreihe 1 zur Umfangsrille 2 hin begrenzenden Flanken bildet. Die die Umfangsrille 2 zur Umfangsrippe 3 hin begrenzende Rillenwand der Umfangsrille 2 bildet die die Umfangsrippe 3 zur Umfangsrille 2 hin begrenzende Flanke der Umfangsrippe 3. Die Rillenwände der Umfangsrille 2 erstrecken sich dabei jeweils in radialer Richtung R des Fahrzeugluftreifens ausgehend vom Rillengrund 12 der Umfangsrille 2 bis zur radial äußeren Oberfläche 11 der durch die jeweilige Rillenwand begrenzten Profilblockreihe 1 bzw. Umfangsippe 3.

Wie in Fig.1 zu erkennen ist, sind in der Umfangsrippe 3 über den Umfang des Fahrzeugluftreifens hinweg verteilt Querrillen 8 ausgebildet, welche sich jeweils ausgehend von der Umfangsrille 2 in axialer Richtung A des Fahrzeugluftreifens in die Umfangsrippe 3 erstrecken und in axialer Richtung A im Abstand N von der Umfangsrille 4 enden. Die Umfangsrippe 3 ist längs ihrer Erstreckung in Umfangsrichtung U mit einer in axialer Richtung A in der radial äußeren Oberfläche 11 gemessenen Breite M ausgebildet.

Die Breite M ist dabei mit 20mm≤ M ≤150mm gewählt.
Der Abstand N ist mit 5mm ≤ N ausgebildet.

Die Umfangsrille 2 ist mit einer in radialer Richtung R gemessenen Profiltiefe P_{T} ausgebildet, welche den in radialer Richtung R gemessenen Abstand zwischen dem tiefsten Punkt des Rillengrundes 12 der Umfangsrille 2 und der radial äußeren Oberfläche 11 der Umfangsrippe 3 in der axialen Position ihrer Schnittkante mit der die Umfangsrille 2 zur Umfangsrippe 3 begrenzenden Rillenwand angibt.

Die Umfangsrille 2 ist mit einer in der radial äußeren Oberfläche 11 der Profilblockreihe 1 und der Umfangsrippe 3 in axialer Richtung A gemessenen Rillenbreite B₄ ausgebildet mit 7mm≤ B₄ ≤ 20mm.

Die Querrillen 8 sind in dem dargestellten Ausführungsbeispiel ausgehend von der Umfangsrille 2 geradlinig erstreckt ausgebildet mit einem längs der Haupterstreckungsrichtung der Querrille 8 ausgehend von der Umfangsrille 2 ersten Erstreckungsabschnitt 9 der Erstreckungslänge L₁ und mit einem sich unmittelbar an den ersten Erstreckungsabschnitt 9 in Haupterstreckungsrichtung der Querrille 8 anschließenden zweiten Erstreckungsabschnitt 10 der Erstreckungslänge L₂. Die Erstreckungslängen L₁ und L₂ sind mit 5mm ≤ L₁ und mit 5mm ≤ L₂ ausgebildet.

Die Querrille 8 ist dabei in ihrem ersten Erstreckungsabschnitt 9 längs des Erstreckungsabschnitts 9 in radialer Richtung R nach innen hin mit einem Rillengrund 13 radial begrenzt und in Umfangsrichtung beiderseits dieses Rillengrunds jeweils durch eine Rillenwand 14 bzw. 15 begrenzt. Die Rillenwände 14 und 15 erstrecken sich im Wesentlichen in radialer Richtung R ausgehend vom Rillengrund 13 nach außen bis zur radial äußeren Oberfläche 11 der Umfangsrippe 3.

Der Rillengrund 13 erstreckt sich längs des ersten Erstreckungsabschnitts 9 über die gesamte Erstreckungslänge L₁ in den jeweils senkrecht zur Haupterstreckungsrichtung der Querrille 8 - und somit im dargestellten Ausführungsbeispiel in den in Umfangsrichtung U - gebildeten Querschnittebenen ausgehend von der Rillenwand 14 mit einer im wesentlichen geradlinigen Schnittkontur über die gesamte Erstreckungsbreite der Querrille 8 bis zur Rillenwand 15. Im ersten Erstreckungsabschnitt 9 ist die Querrille 8 mit einer Rillentiefe t₁ ausgebildet. Im dargestellten Ausführungsbeispiel ist beispielsweise t₁ = P_{T} ausgebildet. Die Querrille 8 ist längs ihrer Erstreckung im ersten Erstreckungsabschnitt 9 mit einer in der radial äußeren Oberfläche 11 der Umfangsrippe 3 quer zur Haupterstreckungsrichtung der Querrille im ersten Erstreckungsabschnitt gemessenen Breite b ausgebildet.

Die Querrille 8 ist in ihrem zweiten Erstreckungsabschnitt 10 lediglich aus zwei sich schneidenden und die Querrille 8 quer zur Haupterstreckungsrichtung der Querrille 8 - und somit im dargestellten Ausführungsbeispiel in Umfangsrichtung U - begrenzenden Rillenwänden 17 und 18 ausgebildet. Die Rillenwand 17 schneidet die radial äußere Oberfläche 11 der Umfangsrippe 3 in einer Schnittkonturlinie v, die Rillenwand 18 schneidet die radial äußere Oberfläche 11 der Umfangsrippe 3 in einer Schnittkonturlinie w. Die Schnittkonturlinien v und w schneiden sich in dem von der Umfangsrille 2 weg weisenden Erstreckungsende des zweiten Erstreckungsabschnitts 10 der Querrille 8 in einem in der radial äußeren Oberfläche 11 ausgebildeten Schnittpunkt S. Die Schnittkonturlinie v verbindet dabei die von der Rillenwand 14 mit der radial äußeren Oberfläche 11 gebildete Schnittkonturlinie in der Position des Übergangs von erstem Erstreckungsbereich 9 und zweitem Erstreckungsbereich 10 mit dem Schnittpunkt S. Die Schnittkonturlinie w verbindet die von der Rillenwand 15 mit der radial äußeren Oberfläche 11 gebildete Schnittkonturlinie in der Position des Übergangs zwischen erstem Erstreckungsabschnitt 9 und zweitem Erstreckungsabschnitt 10 mit dem Schnittpunkt S. Die Schnittkonturlinien v und w sind dabei längs der gesamten Erstreckungslänge L₂ bis zum Schnittpunkt S hin unter kontinuierlicher Verringerung ihres Abstandes zueinander aufeinander zu verlaufend ausgebildet und schneiden sich im Schnittpunkt S unter Einschluss eines spitzen Winkels. Im dargestellten Ausführungsbeispiel ist die Schnittkonturlinie v und die Schnittkonturlinie w geradlinig ausgebildet.

Die Rillenwand 17 ist in den senkrecht zur Erstreckungsrichtung der Querrille 8 gebildeten Schnittebenen unter Einschluss eines Neigungswinkels γ zur Radialen R - wie in den Fig.4, 5 und 6 dargestellt ist - geneigt verlaufend ausgebildet. Ebenso ist die Rillenwand 18 in den senkrecht zur Erstreckungsrichtung der Querrille 8 gebildeten Schnittebenen - wie in den Fig. 4, 5 und 6 dargestellt ist - unter Einschluss eines Neigungswinkels β zur Radialen R geneigt verlaufend ausgebildet.

Die Rillenwände 17 und 18 schneiden sich in einer Schnittkonturlinie g, welche im dargestellten Ausführungsbeispiel eine Gerade bildet. In den senkrecht zur Erstreckungsrichtung der Querrille 8 gebildeten Schnittebenen schließen die Rillenwände 17 und 18 dabei einen Winkel δ mit δ =(β + γ) miteinander ein. Der Winkel δ ist dabei mit 45°≤ δ ≤ 120° - beispielsweise mit δ =90° - ausgebildet.

Die Winkel β und γ sind in einem Ausführungsbeispiel mit β = γ ausgebildet. Beispielweise ist δ =90°, β = 45° und γ =45° ausgebildet.

In den senkrecht zur Erstreckungsrichtung der Querrille 8 gebildeten Schnittebenen ist die Querrille 8 in ihrem zweiten Erstreckungsbereich 10 jeweils mit einer Rillentiefe t₂ ausgebildet, welche jeweils in den Schnittebenen den radialen Abstand zwischen der radial äußeren Oberfläche 11 der Umfangsrippe 3 und der Schnittkonturlinie g bildet. Die Schnittkonturlinie g schneidet die radial äußere Oberfläche 11 im Schnittpunkt S, welcher auch der Schnittpunkt der Schnittkonturlinien v und w ist. Die Rillentiefe t₂ steigt dabei längs der Erstreckung des zweiten Erstreckungsbereichs 10 ausgehend von dem durch den Schnittpunkt S gebildeten Erstreckungsende, in welchem die Rillentiefe t₂ mit t₂ =0mm ausgebildet ist, in Richtung zur Umfangsrille 2 über den gesamten Erstreckungsbereich 10 der Erstreckungslänge L₂ bis zum ersten Erstreckungsabschnitt 9 kontinuierlich an. Die maximale Rillentiefe t₂ₘₐₓ des zweiten Erstreckungsbereichs 10 ist am Anfang des zweiten Erstreckungsbereichs 10 im Übergang zwischen erstem Erstreckungsbereich 9 und 10 ausgebildet.

Wie den Figuren 7, 3 und 4 zu entnehmen ist, ist der erste Erstreckungsabschnitt 9 an seinem in Haupterstreckungsrichtung der Querrille 8von der Umfangsrille 2 weg weisend ausgebildeten Erstreckungsende mit einer Rillenwand 16 begrenzt, welche sich ausgehend vom Rillengrund 13 des ersten Erstreckungsabschnitts 9 in radialer Richtung R des Reifens nach außen hin bis zur Rillenwand 17 und 18 des zweiten Erstreckungsabschnittes 10 erstreckt. Die Rillenwand 16 erstreckt sich dabei im Rillengrund 13 über die gesamte Erstreckungsbreite der Querrille 8. In der in Draufsicht auf das Laufstreifenprofil gebildeten radialen Projektion auf die Querrille 8 bildet die Schnittkonturlinie der Rillenwand 16 mit den Rillenwänden 17 und 18 dabei- wie in Fig.2 und Fig. 1 dargestellt ist - eine geradlinige Schnittkonturlinie h. Im dargestellten Ausführungsbeispiel ist die Schnittkonturlinie h in dieser radialen Projektion unter Einschluss eines Winkels α zur Haupterstreckungsrichtung der Querrille 8 ausgebildet, wobei im dargestellten Ausführungsbeispiel α mit α = 90° gewählt ist.

Im dargestellten Ausführungsbeispiel ist die Schnittlinie g als Gerade ausgebildet. Die Rillenwände 17 und 18 sind im Wesentlichen als ebene, geneigte Flächen ausgebildet. Ebenso sind die Rillenwände 14 und 15 im Wesentlichen als ebene Flächen ausgebildet. Die Tiefe t₂ₘₐₓ ist mit t_{2max ≤} t₁ ausgebildet. Im dargestellten Ausführungsbeispiel ist die Tiefe t₂ₘₐₓ mit t₂ₘₐₓ ≤ (0,5 t₁) ausgebildet. Im dargestellten Ausführungsbeispiel ist die Tiefe t₂ₘₐₓ beispielsweise mit t₂ₘₐₓ = (0,5 t₁) ausgebildet.

Die Breite b ist mit 3 mm ≤ b ≤ 13 mm ausgebildet. Beispielsweise ist b mit b = 10 mm ausgebildet.

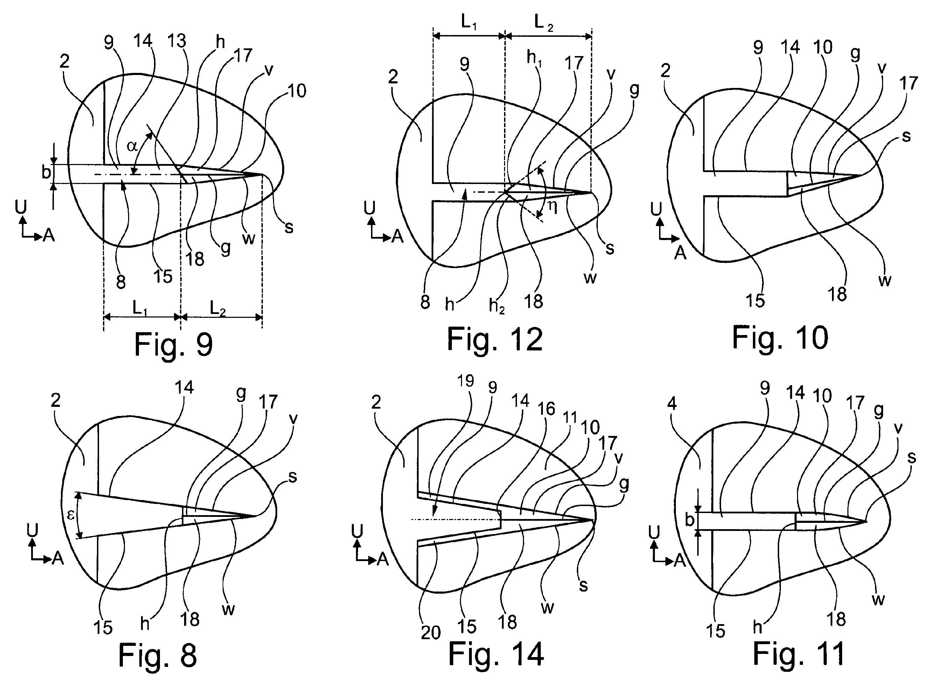

Fig. 9 zeigt ein Ausführungsbeispiel, bei welchem der Winkel α mit 45° ≤ α ≤ 90° ausgebildet ist, wobei im dargestellten Ausführungsbeispiel von Fig. 9 der Winkel α mit α = 60° gewählt ist.

Wie in Fig.1 dargestellt ist, schließen die geradlinigen Schnittkonturlinien v und w einen Winkel ε miteinander ein. In dem in Fig.1 und Fig.2 dargestellten Ausführungsbeispiel bildet in der in radialer Richtung R gebildeten Draufsicht die Projektion der Schnittlinie g in die durch die Schnittkonturlinien v und w aufgespannten Ebene die Winkelhalbierende des durch die Schnittkonturlinien v und w eingeschlossenen Winkels ε.

Fig.10 zeigt ein Ausführungsbeispiel, bei dem - anders als in dem in Fig.1 und Fig.2 dargestellten Ausführungsbeispiel - die in radialer Richtung gebildete Projektion der Schnittkonturlinie g in die durch die Schnittkonturlinien v und w gebildete Ebene nicht kollinear mit der Winkelhalbierenden ausgebildet ist. Die Winkel β und γ sind in einem Ausführungsbeispiel mit β ≠ γ ausgebildet.

Die Figuren 1, 2 und 3 zeigen ein Ausführungsbeispiel, bei dem die Rillenwände 14 und 15 und somit auch die Schnittkonturlinien der Rillenwände 14 und 15 mit der radial äußeren Oberfläche 11 der Umfangsrippe 3 parallel zueinander ausgerichtet sind.

Fig.8 zeigt ein anderes Ausführungsbeispiel, bei welchem die Rillenwände 14 und 15 und somit die Schnittkonturlinien der Rillenwände 14 und 15 mit der radial äußeren Oberfläche 11 der Umfangsrippe 3 ebenfalls unter Einschluss des Winkels ε zueinander ausgerichtet sind und bei welchem die Schnittkonturlinien der Rillenwände 14 und 15 mit der radial äußeren Oberfläche 11 jeweils geradlinige Verlängerungen der Schnittkonturlinien v und w der Rillenwände 17 und 18 mit der radial äußeren Oberfläche 11 bilden.

Fig.11 zeigt ein Ausführungsbeispiel, bei welchem die Schnittkonturlinien v und w längs ihrer Erstreckung über den zweiten Erstreckungsabschnitt 10 ausgehend vom ersten Erstreckungsabschnitt 9 bis zum Schnittpunkt S jeweils krummlinig ausgebildet sind, wobei die Krümmung der Schnittkonturlinie v jeweils zur Rillenwand 18 hin gekrümmt und die Schnittkonturlinie w zur Rillenwand 17 hin gekrümmt ausgebildet ist. Im dargestellten Ausführungsbeispiel weisen die Schnittkonturlinie v und die Schnittkonturlinie w beispielsweise jeweils einen Krümmungsabschnitt einer Kreislinienform auf. Die beiden Kreise schneiden sich im Schnittpunkt S. Ausgehend vom ersten Erstreckungsabschnitt 9 nimmt über die gesamte Erstreckungslänge der Schnittkonturlinien v und w in Richtung Schnittpunkt S der Abstand zwischen den Konturlinien v und w längs der Haupterstreckungsrichtung der Rille 8 progressiv ab.

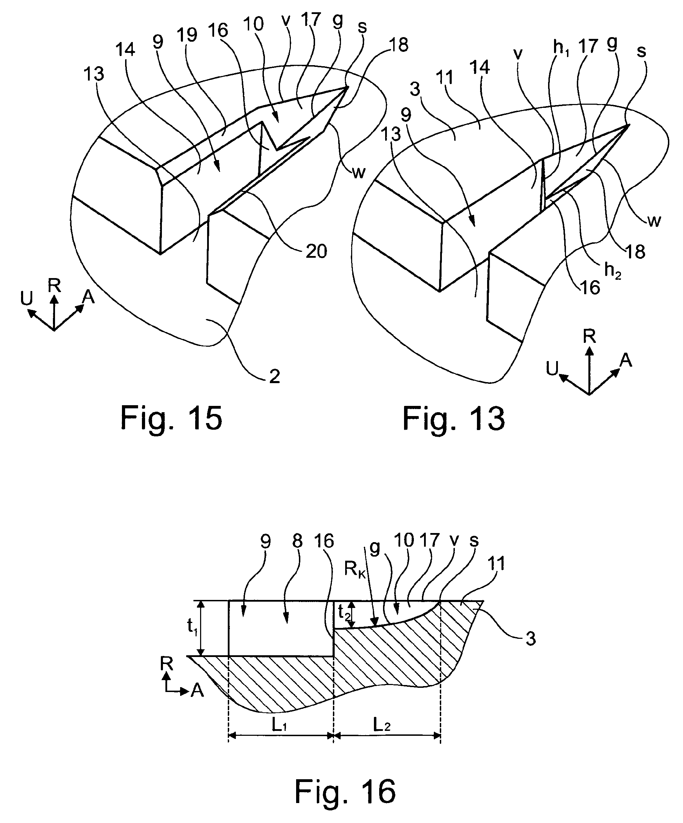

Fig.16 zeigt ein Ausführungsbeispiel an einer Querrille 8, welche - wie im Zusammenhang mit den Figuren 1 und 2 beschrieben und dargestellt - mit Schnittkonturlinien v und w - ausgebildet ist, bei dem jedoch die Schnittkonturlinie g längs ihrer gesamten Erstreckungslänge L₂ ausgehend vom Übergang zwischen erstem Erstreckungsabschnitt 9 und zweitem Erstreckungsabschnitt 10 bis zu dem das Erstreckungsende des zweiten Erstreckungsabschnitts 10 bildenden Schnittpunkt S mit einem progressiv abnehmenden Verlauf der Tiefe t₂ ausgebildet ist. Fig. 3 zeigt dabei ein Ausführungsbeispiel, bei dem die Schnittkonturlinie g längs ihrer Erstreckung zum Schnittpunkt S vom Reifen weg weisend stetig gekrümmt ausgebildet ist.

Fig.15 zeigt ein Ausführungsbeispiel, bei dem eine Rille analog zur Ausbildung der Rille von Fig.2 und Fig.3 ausgebildet ist, wobei jedoch in diesem Ausführungsbeispiel die Rillenwände 14 und 15 des ersten Erstreckungsabschnitts 9 an ihrem radial äußeren Erstreckungsende im Übergangsbereich zur radial äußeren Oberfläche 11 mit einer Fase 19 bzw. 20 ausgebildet sind, wobei die angefasten Flächen 19 und 20 hinsichtlich ihrer Neigung zur Radialen eine Verlängerung der geneigten Rillenwände 17 und 18 des zweiten Erstreckungsabschnitts 10 in den ersten Erstreckungsabschnitt 9 der Querrille 8 darstellen.

Fig.14 zeigt ein entsprechendes Ausführungsbeispiel mit Fasen 19 und 20 anhand eines Ausführungsbeispiels der unter Einschluss eines Winkels ε ausgebildeten Rillenwände 14 und 15 von Fig.8.

Die Fig. 12 und 13 zeigen ein Ausführungsbeispiel, bei welchem die Rillenwand 17 mit der Rillenwand 16 eine Schnittkonturlinie h₁ und die Rillenwand 18 mit der Rillenwand 16 eine Schnittkonturlinie h₂ bildet, wobei die Schnittkonturlinie h₁ geradlinig ausgebildet ist und wobei die Schnittkonturlinie h₂ geradlinig ausgebildet ist. Bei diesem Ausführungsbeispiel sind die Schnittkonturlinien h₁ und h₂ in der radialen Projektion auf die durch die Schnittkonturlinien v und w g bestimmten Ebene jedoch nicht auf einer gemeinsamen Geraden ausgebildet, sondern schließen in der radialen Projektion auf die durch die Schnittkonturlinien v und w bestimmten Ebene einen Winkel η ein mit 90°≤η≤ 180°. Im dargestellten Ausführungsbeispiel ist mit η = 90°gewählt. Die Schnittkonturlinien h₁ und h₂ schließen dabei in ihrem Schnittpunkt einen zum Schnittpunkt S hin geöffneten Winkel η ein.

Die Erstreckungslänge L₁ bemisst sich als die von der Umfangsrille 2 bis zur Position der radialen Projektion des Schnittpunktes der Schnittkonturlinie g mit der Rillenwand 16 in Haupterstreckungsrichtung des ersten Erstreckungsabschnitts 9 der Querrille 8 bemessene Erstreckungslänge. Die Erstreckungslänge L₂ ist dabei die in Haupterstreckungsrichtung des zweiten Erstreckungsabschnitts 10 gemessene Erstreckungslänge der Rille längs der Erstreckung der Schnittkonturlinie g.

Fig. 17 zeigt ein Ausführungsbeispiel eines Laufstreifenprofils mit einer Profilblockreihe 1, einer Umfangsrille 2, einer Umfangsrippe 3, einer Umfangsrille 4 und einer Profilblockreihe 21, welche jeweils in axialer Richtung A nebeneinander angeordnet sind. Die Profilblockreihe 21 stellt in diesem Ausführungsbeispiel die rechte Schulterprofilblockreihe dar und ist aus über den Umfang des Fahrzeugluftreifens hinweg verteilten, in Umfangsrichtung U hintereinander angeordneten und jeweils durch Querrillen 23 voneinander getrennten Profilblockelementen 22 bekannter Art ausgebildet. Fig.17 zeigt dabei ein Ausführungsbeispiel, bei welchem in der Umfangsrippe 3 - jeweils über den Umfang des Fahrzeugluftreifens hinweg verteilt angeordnet - ausgehend von der Umfangsrille 2 Querrillen 8 bestehend aus erstem Erstreckungsabschnitt 9 und zweitem Erstreckungsabschnitt 10 ausgebildet sind und bei welchem zusätzlich in analoger Weise über den Umfang des Fahrzeugluftreifens hinweg verteilt angeordnet in der Umfangsrippe 3 jedoch ausgehend von der Umfangsrille 4 Querrillen 8' - bestehend aus ersten Erstreckungsabschnitten 9 und zweiten Erstreckungsabschnitten 10 - ausgebildet sind, wobei über den Umfang des Fahrzeugluftreifens hinweg die Querrillen 8 und die Querrillen 8' in alternierender Abfolge angeordnet sind.

Die Querrillen 8 bzw. 8' sind wie in den oben dargestellten oder beschriebnene Ausführungsbeispielen ausgebildet.

Fig. 17 zeigt darüber hinaus ein weiteres Ausführungsbeispiel, bei welchem die Querrillen 8 mit einer schrägen Anordnung unter Einschluss eines Winkels ζ zur Umfangsrichtung U mit 30° ≤ ζ ≤ 90° ausgerichtet sind. Im dargestellten Ausführungsbeispiel ist ζ=45° gewählt. Fig. 1 zeigt ein Ausführungsbeispiel, bei dem der Winkel ζ=90° ausgebildet ist.

### Bezugszeichenliste

### (Teil der Beschreibung)

- 1: Profilblockreihe
- 2: Umfangsrille
- 3: Umfangsrippe
- 4: Umfangsrille
- 5: Umfangsrippe
- 6: Profilblockelement
- 7: Querrille
- 8: Querrille
- 9: Erster Erstreckungsabschnitt
- 10: Zweiter Erstreckungsabschnitt
- 11: Radial äußere Oberfläche
- 12: Rillengrund
- 13: Rillengrund
- 14: Rillenwand
- 15: Rillenwand
- 16: Stirnwand
- 17: Rillenwand
- 18: Rillenwand
- 19: Fase
- 20: Fase
- 21: Profilblockreihe
- 22: Profilblockelement
- 23: Querrille

## Patentansprüche

1. Laufstreifenprofil eines Fahrzeugreifens - insbesondere eines Fahrzeugluftreifens - mit radial erhabenen Profilelementen (1,3,5), welche durch erste Rillen (2,4) voneinander getrennt und in radialer Richtung R nach außen hin durch eine radial äußere Oberfläche (11) begrenzt sind, und mit zweiten Rillen (8), welche sich jeweils ausgehend von einer ersten Rille (2) bis in ein von der ersten Rille (2) begrenztes Profilelement (3) hinein erstrecken und dort mit Abstand zu allen ersten Rillen (1,3,5) enden,
wobei die zweiten Rillen (8) längs ihrer in der radial äußeren Oberfläche (11) des Profilelementes (3) ausgebildeten Haupterstreckung ausgehend von der ersten Rille (2) zu ihrem Erstreckungsende hin mit einem ersten Erstreckungsabschnitt (9) und mit einem zweiten Erstreckungsabschnitt (10), welcher bis zum Erstreckungsende der zweiten Rille (8) reicht, ausgebildet sind,
wobei die ersten Rillen (2) und die zweiten Rillen (8) in ihrem ersten Erstreckungsabschnitt (9) jeweils längs ihrer Haupterstreckung in radialer Richtung R des Reifens nach innen hin durch einen Rillengrund (12,13) und beiderseits des Rillengrundes (12,13) jeweils durch eine Rillenwand (14,15) begrenzt werden, welche sich in radialer Richtung R des Reifens ausgehend vom Rillengrund (12,13) bis zur radial äußeren Oberfläche (11) erstreckt,
**dadurch gekennzeichnet,**
**dass** die zweiten Rillen (8) in ihrem zweiten Erstreckungsabschnitt (10) jeweils längs ihrer Haupterstreckung durch zwei Rillenwände (17,18) begrenzt werden, welche jeweils die radial äußere Oberfläche (11) in einer Schnittlinien (v) bzw. (w) schneiden, wobei die Schnittlinie (v) und (w) längs der gesamten Erstreckung des zweiten Erstreckungsabschnittes (10) bis zum Erstreckungsende unter Einschluss eines spitzen Winkels auf einander zu verlaufen und sich im Erstreckungsende der zweiten Rille (8) in einem Schnittpunkt (S) schneiden, und welche sich in einer Tiefe t₂ in einer Schnittlinie (g) schneiden, wobei die Schnittlinie (g) längs der Erstreckung der Zweiten Rille (8) über deren gesamte Erstreckung im zweiten Erstreckungsabschnitt (10) in Richtung zum Erstreckungsende der zweiten Rille (8) in radialer Richtung R stetig ansteigt und am Erstreckungsende die radial äußere Oberfläche (11) im Schnittpunkt (S) schneidet.

2. **Laufstreifenprofil eines Fahrzeugreifens** gemäß den Merkmalen von Anspruch 1, wobei die Schnittlinie g geradlinig ausgebildet ist.

3. **Laufstreifenprofil eines Fahrzeugreifens** gemäß den Merkmalen von Anspruch 1, wobei die Schnittlinie g gekrümmt und längs der gesamten Ersteckung der Schnittlinie g in Richtung zum Erstreckungsende der zweiten Rille (8) bis zum Erstreckungsende der zweiten Rille (8) hin mit progressiv abnehmender Tiefe t₂ ausgebildet ist.

4. **Laufstreifenprofil eines Fahrzeugreifens** gemäß den Merkmalen von einem der vorangegangenen Ansprüche,
wobei wenigstens eine - insbesondere beide - der Schnittlinien (v) bzw. (w) geradlinig ausgebildet ist (sind).

5. **Laufstreifenprofil eines Fahrzeugreifens** gemäß den Merkmalen von einem der Ansprüche 1 bis 3,
wobei wenigstens eine - insbesondere beide - der Schnittlinien (v) bzw. (w) längs der Erstreckung bis zum Schnittpunkt S jeweils zur anderen Schnittlinie (w) bzw. (v) hin gekrümmt ausgebildet ist (sind).

6. **Laufstreifenprofil eines Fahrzeugreifens** gemäß den Merkmalen von einem der vorangegangenen Ansprüche,
bei dem die zweite Rille (8) zumindest in dem an den zweiten Erstreckungsabschnitt (10) angrenzenden Erstreckungsbereich des ersten Erstreckungsabschnitts (9) mit einer Tiefe t₁ ausgebildet ist und die maximale Tiefe der zweiten Rille (8) im zweiten Erstreckungsabschnitt (10) mit t₂≤t₁ - insbesondere mit t₂≤ (0,5t₁) - ausgebildet ist.

7. **Laufstreifenprofil eines Fahrzeugreifens** gemäß den Merkmalen von einem der vorangegangenen Ansprüche,
bei dem die zweite Rille (8) längs ihrer Erstreckung in ihrem ersten Erstreckungsabschnitt (9) mit einer in der radial äußeren Oberfläche (11) gemessenen Breite b mit 3mm≤b≤ 13mm ausgebildet ist.

8. **Laufstreifenprofil eines Fahrzeugreifens** gemäß den Merkmalen von einem der vorangegangenen Ansprüche,
bei dem am Erstreckungsende des ersten Erstreckungsabschnitt (9) eine den ersten Erstreckungsabschnitt (9) zum zweiten Erstreckungsabschnitt (10) hin begrenzende Rillenwand (16) ausgebildet ist, welche ausgehend vom Rillengrund (13) der zweiten Rille (8) im ersten Erstreckungsabschnitt (9) nach radial außen bis zu einer Schnittlinie h mit den sich schneidenden Rillenwänden (17,18) des zweiten Erstreckungsabschnitts (10) der zweiten Rille (8) erstreckt ausgebildet ist,
wobei insbesondere diese Schnittlinie h in der radial äußeren Oberfläche (11) geradlinig unter Einschluss eines Winkels α zu der Haupterstreckungsrichtung der zweiten Rille (8) im zweiten Erstreckungsbereich mit 45° ≤α≤90° ausgerichtet ausgebildet ist.

## Claims

1. Tread profile of a vehicle tyre - in particular a pneumatic vehicle tyre - with radially raised profile elements (1, 3, 5), which are separated from one another by first grooves (2, 4) and are outwardly delimited in the radial direction R by a radially outer surface (11), and with second grooves (8), which respectively extend from a first groove (2) into a profile element (3) delimited by the first groove (2) and end there at a distance from all of the first grooves (1, 3, 5),
wherein, along their main extent formed in the radially outer surface (11) of the profile element (3) and taken from the first groove (2) to the end of their extent, the second grooves (8) are formed with a first portion of extent (9) and with a second portion of extent (10), which reaches up to the end of the extent of the second groove (8), wherein, respectively along their main extent, the first grooves (2) and the second grooves (8) are delimited inwardly in the radial direction R of the tyre in their first portion of extent (9) by a groove base (12, 13) and on both sides of the groove base (12, 13) in each case by a groove wall (14, 15), which extends from the groove base (12, 13) up to the radially outer surface (11) in the radial direction R of the tyre,
**characterized**
**in that**, respectively along their main extent, the second grooves (8) are delimited in their second portion of extent (10) by two groove walls (17, 18), which respectively intersect the radially outer surface (11) in a sectional line (v) and (w), wherein the sectional lines (v) and (w) run towards one another along the entire extent of the second portion of extent (10) up to the end of the extent, while including an acute angle, and intersect at the end of the extent of the second groove (8) at a point of intersection (S), and which intersect at a depth t₂ in a sectional line (g), wherein the sectional line (g) rises steadily in the radial direction R along the extent of the second groove (8) over the entire extent thereof in the second portion of extent (10) in the direction of the end of the extent of the second groove (8) and at the end of the extent intersects the radially outer surface (11) at the point of intersection (S).

2. Tread profile of a vehicle tyre according to the features of Claim 1, wherein the sectional line g is formed as a straight line.

3. Tread profile of a vehicle tyre according to the features of Claim 1, wherein the sectional line g is formed as curved and with a progressively decreasing depth t₂ along the entire extent of the sectional line g in the direction of the end of the extent of the second groove (8) up to the end of the extent of the second groove (8).

4. Tread profile of a vehicle tyre according to the features of one of the preceding claims,
wherein at least one - in particular both - of the sectional line(s) (v) and/or (w) is/are formed as (a) straight line(s).

5. Tread profile of a vehicle tyre according to the features of one of Claims 1 to 3,
wherein at least one - in particular both - of the sectional line(s) (v) and/or (w) is/are formed along the extent up to the point of intersection S in each case as curved in relation to the other sectional line (w) or (v) respectively.

6. Tread profile of a vehicle tyre according to the features of one of the preceding claims,
in which, at least in the region of extent of the first portion of extent (9) that adjoins the second portion of extent (10), the second groove (8) is formed with a depth t₁ and the maximum depth of the second groove (8) in the second portion of extent (10) is formed with t₂ ≤ t₁ - in particular with t₂ ≤ (0.5 t₁).

7. Tread profile of a vehicle tyre according to the features of one of the preceding claims,
in which the second groove (8) is formed along its extent in its first portion of extent (9) with a width b, measured in the radially outer surface (11), with 3 mm ≤ b ≤ 13 mm.

8. Tread profile of a vehicle tyre according to the features of one of the preceding claims,
in which, at the end of the extent of the first portion of extent (9), a groove wall (16) is formed, which delimits the first portion of extent (9) from the second portion of extent (10) and is formed so as to extend from the groove base (13) of the second groove (8) in the first portion of extent (9) radially outwards up to a sectional line h with the intersecting groove walls (17, 18) of the second portion of extent (10) of the second groove (8), wherein in particular this sectional line h is formed in the radially outer surface (11) aligned as a straight line, while including an angle α in relation to the main direction of extent of the second groove (8) in the second region of extent, with 45° ≤ α ≤ 90°.

## Revendications

1. Profil de bande de roulement pour bandage de roue de véhicule, en particulier bandage pneumatique de roue de véhicule, le profil présentant
des éléments profilés (1, 3, 5) rehaussés radialement, séparés les uns des autres par des premières rainures (2, 4), délimités vers l'extérieur dans la direction radiale R par une surface radialement extérieure (11) et
des deuxièmes rainures (8) qui partent chacune d'une première rainure (2) et s'étendent jusque dans un élément profilé (3) délimité par les premières rainures (2) pour s'y terminer à distance de toutes les premières rainures (1, 3, 5),
dans leur extension principale formée dans la surface radialement extérieure (11) de l'élément profilé (3), les deuxièmes rainures (8) présentant entre la première rainure (2) et la fin de leur extension une première section d'extension (9) et une deuxième section d'extension (10) qui s'étend jusqu'à la fin de l'extension de la deuxième rainure (8),
dans la direction radiale R du bandage de roue, les premières rainures (2) et les deuxièmes rainures (8) étant délimitées dans leur première section d'extension (9) chacune dans leur extension principale vers l'intérieur par un fond (12, 13) de rainure et des deux côtés du fond (12, 13) de rainure par une paroi (14, 15) de rainure qui s'étend dans la direction radiale R du bandage de roue, à partir du fond (12, 13) de la rainure jusqu'à la surface radialement extérieure (11), **caractérisé en ce que**
dans la deuxième section d'extension (10) de leur extension principale, les deuxièmes rainures (8) sont délimitées par deux parois (17, 18) de rainure qui coupent chacune la surface radialement extérieure (11) selon une ligne de coupe (v) ou (w),
**en ce que** dans toute l'extension de la deuxième section d'extension (10), les lignes de coupe (v) et (w) s'étendent jusqu'à la fin de l'extension en formant un angle aigu, se coupent à la fin de l'extension de la deuxième rainure (8) en un point de concours (S) et se coupent à une profondeur t₂ selon une ligne de coupe (g),
**en ce que** sur la totalité de l'extension de la deuxième rainure (8), la ligne de coupe (g) présente dans la deuxième section d'extension (10) une pente montante constante dans la direction radiale R en direction de la fin de l'extension de la deuxième rainure (8) et coupe la surface radialement extérieure (11) au point de concours (S) à la fin de son extension.

2. Profil de bande de roulement d'un bandage de roue de véhicule selon les caractéristiques de la revendication 1, dans lequel la ligne de coupe g est une ligne droite.

3. Profil de bande de roulement d'un bandage de roue de véhicule selon les caractéristiques de la revendication 1, dans lequel la ligne de coupe g est courbe et présente sur toute l'extension de la ligne de coupe g une profondeur t₂ qui diminue progressivement en direction de l'extrémité d'extension de la deuxième rainure (8) et jusqu'à l'extrémité de l'extension de la deuxième rainure (8).

4. Profil de bande de roulement d'un bandage de roue de véhicule selon les caractéristiques de l'une des revendications précédentes, dans lequel au moins l'une des lignes de coupe (v) ou (w) et en particulier ces deux lignes de coupe sont des lignes droites.

5. Profil de bande de roulement d'un bandage de roue de véhicule selon les caractéristiques de l'une des revendications 1 à 3, dans lequel au moins l'une et en particulier les deux lignes de coupe (v) ou (w) sont courbes le long de leur extension jusqu'au point de concours S avec l'autre ligne de coupe (w) ou (v).

6. Profil de bande de roulement d'un bandage de roue de véhicule selon les caractéristiques de l'une des revendications précédentes, dans lequel la deuxième rainure (8) présente une profondeur t₁ au moins dans la partie de la première section d'extension (9) adjacente à la deuxième section d'extension (10), la profondeur maximale de la deuxième rainure (8) dans la deuxième section d'extension (10) vérifiant la relation t₂ ≤ t₁ et en particulier la relation t₂ ≤ (0,5 t₁).

7. Profil de bande de roulement d'un bandage de roue de véhicule selon les caractéristiques de l'une des revendications précédentes, dans lequel la deuxième rainure (8) présente dans la première section (9) de son extension une largeur b, mesurée dans la surface radialement extérieure (11), qui vérifie la relation 3 mm ≤ b ≤ 13 mm.

8. Profil de bande de roulement d'un bandage de roue de véhicule selon les caractéristiques de l'une des revendications précédentes, dans lequel à l'extrémité de la première section d'extension (9), une paroi (16) de rainure limite la première section d'extension (9) en direction de la deuxième section d'extension (10) en partant du fond (13) de la deuxième rainure (8) pour s'étendre radialement vers l'extérieur dans la première section d'extension (9) jusqu'à une ligne de coupe h avec les parois (17, 18) de la deuxième section d'extension (10) de la deuxième rainure (8) qui se coupent mutuellement, cette ligne de coupe h étant rectiligne dans la surface radialement extérieure (11) et formant un angle α par rapport à la direction d'extension principale de la deuxième section d'extension de la deuxième rainure (8), avec 45° ≤ α ≤ 90°.
